# EUROPEAN PATENT APPLICATION

(11) **EP 2 072 244 A2**
(43) Date of publication of application: **24.06.2009**
(21) Application number: 08254042.8
(22) Date of filing: 17.12.2008
(51) Int. Cl.: B32B 7/00, B29C 45/14

(54) **Multi-layered molded article with improved bonding between layers**

(30) Priority: 21.12.2007 CN 200710203329
(71) Applicant: FIH (Hong Kong) Limited, Hong Kong (HK)
(72) Inventor: Wu, Kun-Tsan, Shindian City Taipei Hsien Taiwan 231 (TW); Tien, Li-Wen, Shindian City Taipei Hsien Taiwan 231 (TW)
(74) Representative: Craven, Ian

(57) **Abstract**

A molded article (10) includes a soft layer (12), a thermal buffer layer (13), and a substrate (14) moldingly bonded to the thermal bufferlayer. The thermal buffer film is bonded to the soft layer and has a coefficient of thermal expansion between those of the soft layer and the substrate.

## Description

### 1. Field of the Invention

The present invention relates to multi-layer molded articles.

### 2. Description of related art

Molded articles, such as molded shells, are widely used in many technological fields. One example is a molded shell used with a portable electronic device (e.g., a mobile phone) for protecting internal electronic components. Another example is a molded shell used with furniture (e.g., a mini sofa) to provide decoration.

The molded shells may include a plastic substrate having some kind of decorative and/or protective (hereinafter "second") layer formed thereon. The molded shell may be made using an insert molding process. The second layer is placed in the mold cavity and then bonds to the molten plastic injected into the mold for forming the substrate.

Various difficulties may be faced when manufacturing this multi-layer molded article.

Therefore, there is room for improvement within the art.

### BRIEF DESCRIPTION OF THE DRAWINGS

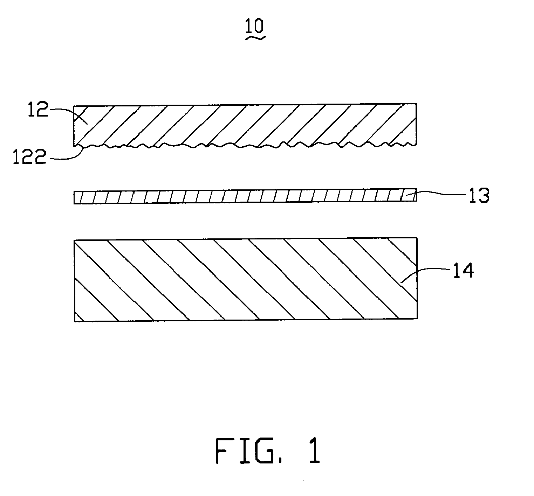

Many aspects of the molded article can be better understood with reference to the following drawing, Figure 1. The components in the drawing are not necessarily drawn to scale, the emphasis instead being placed upon clearly illustrating the principles of the molded article.

Figure 1 is a cut-away view of an exemplary embodiment of a multi-layered molded article.

### DETAILED DESCRIPTION OF THE EXEMPLARY EMBODIMENTS

Referring to Figure 1, in a present embodiment, a multi-layered molded article 10 is shown Article 10 includes a soft layer 1 2, a thermal buffer layer 13 bonded to the soft layer 12, and a substrate 14 moldingly bonded to the buffer layer 13. Thus, the buffer layer 13 is sandwiched between the soft layer 12 and the substrate 14.

The soft layer 12 can be made of a material that is soft relative to the substrate 14. Exemplary soft materials include leather (natural and artificial), all types of fabrics, woven clothes, textiles, and nylon. One surface of the soft layer 12 acts as a bonding surface 122. The bonding surface 122 should have a rough or coarse surface, formed by, for example, a plurality of tiny pores or projections (schematically shown) For some soft materials, the pores and projections of the bonding surface 122 may be a natural property of the material. For other soft materials, the pores and projections may be formed by grinding or sandblasting the bonding surface 122. The tiny pores and projections of the bonding surface 122 interlock with the molten material used to make substrate 14, thereby increasing the bonding of the soft layer 12 to the substrate 10.

The buffer layer 13 is made of a material having a coefficient of thermal expansion between those of the soft layer 12 and the substrate 14. The buffer layer 13 is applied onto the bonding surface 122 of the soft layer 12 by a hot pressing process or a printing process.

The substrate 14 can be formed by injection molding a moldable material. The moldable material can be any of plastic, rubber, and silicone. The plastic material can be any of polyvinylchloride resin (PVC), polyethylene terephthalate (PET), acrylonitrile-butadiene-styrene (ABS), polycarbonate (PC), polyimide (PI), liquid crystal polymer (LCP), polyetherimide (PEI), polyphenylene sulfide (PPS), polystyrene (PS), polypropylene (PP). In particular, ABS and PC exhibit good adhesion to many softer materials. The substrate 14 may be formed on the buffer layer 13 by an injection molding process, such as disclosed in some of the related applications.

During manufacturing of the multi-layered molded article 10, first, the soft layer 12 is provided. The buffer layer 13 is then bonded to the soft layer 12 by a hot pressing process or a printing process. The soft layer 12 with the bonded buffer layer 13 is then placed into an injection mold. The molten plastic material is injected into the mold and bonds to the buffer layer 13. The molten plastic material is then cooled to form the substrate 14. During the injecting and cooling of the molten plastic material, the buffer layer 13 reduces the thermal stress generated in the multi-layered molded article 10, thereby reducing the potential of crinkling of the soft layer 12.

It should be also understood, however, that even though numerous characteristics and advantages of the present embodiments have been set forth in the foregoing description, together with details of the structures and functions of the embodiments, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A molded article, comprising:
a soft layer made of one of leathers, textiles, and cloths;
a thermal buffer film bonded to the soft layer;
a substrate moldingly bonded to the thermal buffer film;
wherein the thermal buffer film has a coefficient of thermal expansion between those of the soft layer and the substrate.

2. The molded article as claimed in claim 1, wherein the soft layer is made of one of leather, fabrics, woven clothes, textiles, and nylon.

3. The molded article as claimed in claim 1, wherein the soft layer has a bonding surface having a plurality of tiny pores or protrusions formed thereon, the thermal buffer film being bonded to the bonding surface of the soft layer.

4. The molded article as claimed in claim 1, wherein the substrate is made of a moldable material.

5. The molded article as claimed in claim 4, wherein the substrate is made of plastic.

6. The molded article as claimed in claim 4, wherein the substrate is made of one of rubber and silicone.
